Europäisches Patentamt

(19) European Patent Office

Office européen des brevets

(11) Veröffentlichungsnummer: **0 067 282**
**B1**

(12) # EUROPÄISCHE PATENTSCHRIFT

(45) Veröffentlichungstag der Patentschrift:
**04.09.85**

(51) Int. Cl.⁴: **A 01 D 78/12**

(21) Anmeldenummer: **82103029.3**

(22) Anmeldetag: **08.04.82**

(54) Heuwerbungsmaschine mit gesteuerten und ungesteuerten Rechwerkzeugen.

(30) Priorität: **16.06.81 DE 3123790**

(43) Veröffentlichungstag der Anmeldung:
**22.12.82 Patentblatt 82/51**

(45) Bekanntmachung des Hinweises auf die Patenterteilung:
**04.09.85 Patentblatt 85/36**

(84) Benannte Vertragsstaaten:
**AT BE CH DE FR GB IT LI**

(56) Entgegenhaltungen:
**DE - A - 2 403 694**
**DE - A - 2 619 867**
**DE - A - 2 930 152**
**DE - A - 3 012 944**
**DE - B - 1 757 720**
**DE - C - 1 221 481**
**FR - A - 2 450 554**
**GB - A - 2 048 042**
**US - A - 4 144 699**

(73) Patentinhaber: **Klöckner-Humboldt-Deutz AG
Zweigniederlassung Fahr, D-7702 Gottmadingen (DE)**

(72) Erfinder: **Wessel, Ulrich, Hilzingerstrasse 33,
D-7702 Gottmadingen (DE)**

ACTORUM AG

## Beschreibung

Die Erfindung bezieht sich auf eine Heuwerbungsmaschine nach dem Oberbegriff des Patentanspruchs 1. Solche, auch Universal-Heumaschinen genannte Maschinen sind für alle in der Heuwerbung vorkommenden Arbeitsgänge geeignet. Für den Betriebsfall «Schwaden» wird die Maschine mit gesteuerten Zinken eingesetzt. Hierbei greifen am Ende der drehbar im Maschinenrahmen gelagerten Zinkentragarme an Kurbeln vorgesehene Steuerrollen in eine in Bezug auf das Maschinengestell ortsfeste Kurvenbahn ein. Für den Betriebsfall «Zetten» ist eine Steuerung der Zinken nicht erforderlich. Hier laufen die Steuerrollen bei gleichbleibender Stellung der Zinken zur Bodenoberfläche in einer Ebene um.

Eine derartige Maschine ist beispielsweise aus der DE-C-12 21 481 bekannt. Bei dieser Maschine ist eine Steuervorrichtung vorgesehen, die zwei relativ zueinander schwenkbewegliche Abschnitte aufweist. Durch Planstellen der Steuervorrichtung kann die für den Betriebsfall «Schwaden» benötigte Aushebung der Zinken ausgeschaltet werden. Dennoch sind die Gleitrollen dieser Maschine ständig mit der Steuervorrichtung, also unabhängig davon, für welchen Betriebsfall die Maschine eingesetzt wird, im Eingriff. Der grosse Nachteil dieser Konstruktion ist in der Schwierigkeit zu sehen, eine Steuerkurve zu schaffen, die eine zufriedenstellende Funktion im Betriebsfall «Schwaden» gewährleistet, aber in sich veränderbar sein muss, um dem Betriebsfall «Zetten» zu genügen. Mit einem annähernd vertretbaren konstruktiven und baulichem Aufwand ist eine derartige Lösung nicht bereitzustellen.

Bei der Universal-Heumaschine nach der DE-C-17 57 720 wird, ausgehend von der Maschine nach der DE-C-12 21 481, wird demzufolge vorgeschlagen, die Zinkentragarme zum Umstellen der Arbeitsweise der Maschine mittel- bzw. unmittelbar von der Steuervorrichtung zu entkoppeln und im Drehgestell gegen Verdrehen zu sichern. Gerade aber die letzte Massnahme bedingt eine stabile Ausführung des Drehgestells, was zu einer nicht unerheblichen Gewichtserhöhung der Maschine führt. Ausserdem müssen besondere Massnahmen getroffen werden, um die Zinkentragarme im Drehgestell zu verriegeln bzw. um die während des Betriebsfalls «Zetten» auftretenden Kräfte in das Drehgestell einzuleiten.

In der Praxis hat sich aber gezeigt, dass z.B. bei Schwadmaschinen der als besonders störend empfundene Verschleiss zwischen den Steuerrollen und der Steuervorrichtung eine geeignete Werkstoffpaarung vorausgesetzt – derart gering ist, dass der praktisch bedeutungslos ist. Demzufolge besteht deswegen an sich keine Veranlassung dazu, die Zinkentragarme von der Steuervorrichtung zu entkoppeln und im Drehgestell gegen Verdrehen zu sichern, zumal die Nachteile den Vorteil einer eventuellen Verschleissminderung übersteigen.

So ist es auch nicht erstaunlich, dass dem Stand der Technik auch jüngere Vorschläge zu entnehmen sind, bei denen die Steuerrollen der Zinkentragarme sowohl im Betriebsfall «Schwaden» als auch im Betriebsfall «Zetten» ständig mit einer Steuervorrichtung im Eingriff stehen.

Die GB-A-2 048 042 zeigt eine Reihe von Lösungsvorschlägen dieser Art. Die Zinkentragarme werden in herkömmlicher Weise mit Hilfe von über Torsionsfedern belastete Steuerrollen im Betriebsfall «Schwaden» entlang einer einseitig offenen oder auch innerhalb einer äquidistant geteilten Steuervorrichtung geführt. Den Steuerrollen sind Tastrollen zugeordnet, die in der Bewegungsbahn einer axial verschiebbaren Hülse liegen. Zum Ausschalten der Steuerbewegung wird die Hülse nach unten so lange verschoben, bis die Steuerrollen ausser Funktion mit der Steuervorrichtung treten. Hierbei werden die Torsionsfedern zusätzlich vorgespannt. Bei dieser Anordnung ist insbesondere die Anwendung von Torsionsfedern nachteilig. Diese unterliegen während des Betriebs einer ständigen Wechselbeanspruchung, die unter Umständen zum Bruch einer Feder führen kann.

Die vorstehend erwähnten Nachteile hat man der prinzipiell gleichartig aufgebauten Universal-Heuwerbungsmaschine nach der DE-A-29 30 152 dadurch zu beseitigen versucht, dass die Steuerung der Zinkentragarme im Betriebsfall «Schwaden» durch zusätzliche Tastrollen und einer Stützlaufbahn vorgenommen wird. Beim axialen Verschieben der auch hier vorgesehenen Hülse wird die Steuervorrichtung geöffnet und die eigentlichen Steuerrollen werden so lange verdreht, bis die Kurbeln an Anschlägen des Drehgestells anliegen. In dieser Lage werden die Zinkentragarme für den Betriebsfall «Zetten» gehalten. Obwohl hier störanfällige Torsionsfedern vermieden wurden, zeichnet sich diese Bauart einerseits durch ihren grossen konstruktiven und baulichen Aufwand aus, wobei zudem auch hier ein ausreichend stabiles Drehgestell vorgesehen sein muss. Insgesamt gesehen ist das Gewicht dieser Maschine ausserordentlich gross, so dass dieser Nachteil den an sich vorhandenen Vorteil einer «Zentralverstellung» bei weitem überwiegt.

Schliesslich ist aus der US-A-41 44 699, von der der Gegenstand der vorliegenden Erfindung ausgeht, eine Universal-Heumaschine bekannt geworden, bei der die Steuervorrichtung sowohl für die Funktion «Schwaden» als auch «Zetten» ausgelegt ist. Der, bezogen auf die Achse des Rechrades innen liegende Teil dieser Steuervorrichtung ist in Form der bekannten, räumlich verwundenen Kurve mit äquidistant zueinander liegenden Führungsbahnen ausgebildet. In diesen Führungsbahnen werden die am Ende von Kurbeln der Zinkentragarme angeordneten Steuerrollen geführt. Der innen liegende Teil der Steuervorrichtung geht in einen aussen liegenden Teil über, der in eine, in einer Ebene liegenden Nut mit ebenfalls äquidistant zueinander liegenden Führungsbahnen ausläuft.

Die Zinkentragarme sind im Maschinengestell derartig gelagert, dass die Steuerrollen von der innen liegenden Kurve in die aussen liegende Nut überführt werden können bzw., im umgekehrten Fall, von der aussen liegenden Nut in die innen liegende Kurve gebracht werden können.

Durch die notwendige exzentrische Lage der Zinkentragarme zu den jeweils ihnen zugeordneten Steuerrollen einerseits und andererseits durch die gegenseitige Zuordnung der innen liegenden Kurve und der aussen liegenden Nut ergibt sich zwischen diesen einzelnen Bauteilen eine starke Abhängigkeit hinsichtlich der Massgestaltung bei der konstruktiven Realisierung dieses Vorschlages. Dies macht sich insbesondere darin bemerkbar, dass der Durchmesser der Steuerrollen unverhältnismässig gross gewählt werden muss. Bei diesen Gegebenheiten hat das wiederum zur Folge, dass die innen liegende Kurve zwangsläufig enge Umlenkradien aufweist. Auch zeigt sich aus diesem Grund, dass der Abstand der Führungsbahnen der Kurve und damit der Durchmesser der Steuerrollen nicht beliebig gross gewählt werden kann. Durch diese gegenseitigen Beeinflussung ist auch das Mass der Exzentrizität zwischen einer Steuerrolle und dem ihr zugeordneten Zinkentragarm begrenzt. Für die Länge der Kurbeln gilt daher grundsätzlich, dass diese nur relativ klein gewählt werden kann. Da die an den Rechwerkzeugen auftretenden Kräfte über die Kurbeln und die Steuerrollen eine Abstützung erfahren müssen, stellen sich sehr hohe Reaktionskräfte ein, die eine grosse Beanspruchung sämtlicher Führungsbahnen bewirkt. Dies umso mehr, da diese, ebenfalls durch die geometrische Verhältnisse bedingt, extrem schmal sind. Bedenkt man zudem, dass das Verbringen der Steuerrollen von der einen in die andere Position hier mit erheblichen Mühen verbunden ist, scheidet eine praktische Realisierung dieses Vorschlages aus.

Aufgabe der vorliegenden Erfindung ist es, eine Heuwerbungsmaschine der eingangs genannten Art zu schaffen, die sich insbesondere durch einen einfachen konstruktiven Aufbau auszeichnet. Insbesondere sollen deren Bauteile einfach herzustellen sein. Ferner wird ein möglichst geringes Gesamtgewicht der Maschine angestrebt.

Die Erfindung löst die gestellte Aufgabe mit Hilfe der im kennzeichnenden Teil des Patentanspruchs 1 vorgeschlagenen Massnahmen.

Weitere, sehr vorteilhafte bauliche Ausgestaltungen des Erfindungsgegenstandes sind den Unteransprüchen 2 bis 6 zu entnehmen.

Die erfindungsgemässe Lösung überrascht durch ihren einfachen Aufbau. Auf besonders stabile – schwergewichtige – Teile kann verzichtet werden. Bei einer möglichen Ausführungsform sind sämtliche Steuerelemente zur Bodenoberfläche hin abgeschirmt, so dass die Gefahr von Betriebsstörungen infolge äusserer Einwirkungen völlig ausgeschlossen ist.

Weiter für die Erfindung wesentliche Merkmale sowie die hieraus resultierenden Vorteile sind der nachfolgenden Beschreibung eines Ausführungsbeispiels der Erfindung an Hand der Zeichnungen zu entnehmen.

Es zeigt:

Figur 1: Ein Rechrad einer Heuwerbungsmaschine in teilweise geschnittener Seitenansicht in seiner Stellung für den Betriebsfall «Schwaden»,

Figur 2: das Rechrad der Heuwerbungsmaschine nach Figur 1 in seiner dem Betriebsfall «Zetten» entsprechenden Stellung.

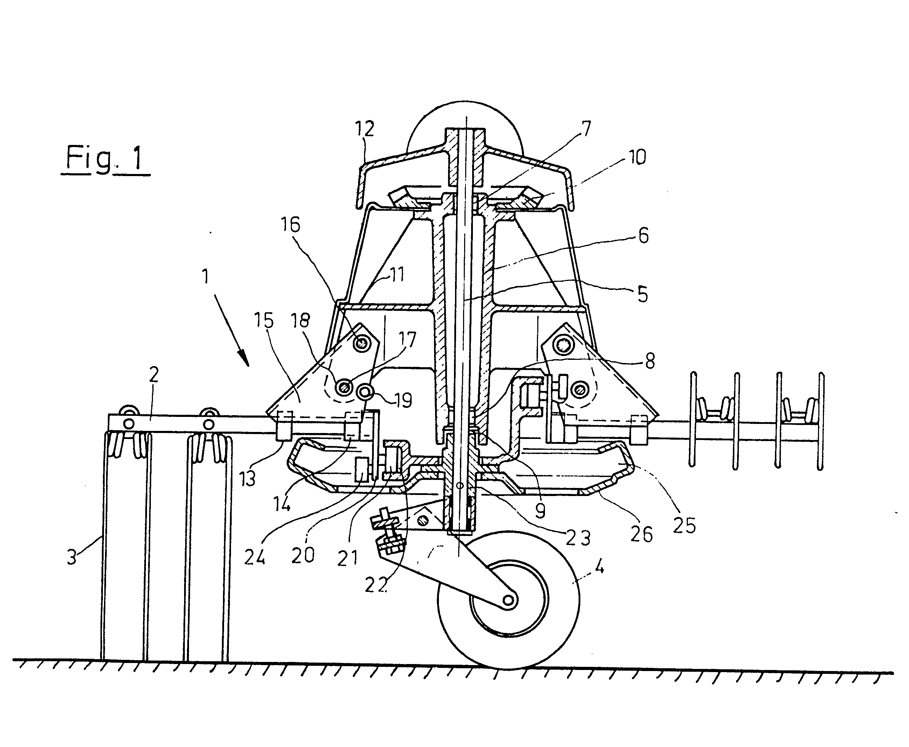

Von der Heuwerbungsmaschine ist in Figur 1 lediglich ein Rechrad 1 in schematischer Darstellung, teils geschnitten, wiedergegeben. Grundsätzlich arbeitet diese Heuwerbungsmaschine in Übereinstimmung mit demjenigen nach dem Stand der Technik mit zwei Rechrädern. Im Betriebsfall «Schwaden» arbeitet die Maschine als sogenannte Zweikreisel-Schwadmaschine. Beide Rechräder laufen vorzugsweise mit der gleichen Drehrichtung um. Das von einem Rechrad erfasste Erntegut wird zur Maschinenmitte hin zusammengeführt und an die Rechwerkzeuge des anderen Rechrads übergeben, dass das insgesamt zusammengeführte Erntegut in einem Seitenschwad ablegt.

Im Betriebsfall «Zetten» weisen die Rechwerkzeuge der Rechräder nach unten. Die Arbeitskreise der Rechwerkzeuge benachbarter Rechräder überschneiden sich. Die Drehrichtung der Rechräder ist entgegengesetzt gerichtet. Das Erntegut wird von den Rechwerkzeugen erfasst, zur Mitte hin zusammengeführt und breit nach hinten ausgestreut.

Das in Figur 1 dargestellte Rechrad 1 weist mehrere Zinkentragarme 2 auf, an deren freien Enden Rechwerkzeuge 3 montiert sind. Von mehreren vorhandenen Zinkentragarmen 2 sind in Figur 1 lediglich zwei gegenüberliegende dargestellt. Das Rechrad 1 wird mit Hilfe eines höhenverstellbaren Laufrades 4 über dem Boden geführt. Das Laufrad 4 ist schwenkbeweglich auf einer konzentrisch zum Rechrad 1 liegenden Achse 5 an deren unterem Ende montiert.

Eine Hohlwelle 6 ist mittels Lagern 7, 8 und 9 drehbeweglich, aber axial feststehend auf der Achse 5 gelagert. Die Hohlwelle 6 ist an ihrem oberen Ende mit einem Tellerrad 10 verschraubt, das in nicht näher dargestellter Weise eine Antriebsverbindung zu einem motorischen Antrieb aufweist. Die Hohlwelle 6 ist Bestandteil eines Drehgestells 11 an dem die rotierenden Bauteile der Heuwerbungsmaschine gelagert sind. Eine feststehende Haube 12 schirmt den oberen Teil der Maschine ab.

Jeder der Zinkentragarme 2 ist in Bezug auf das Drehgestell 11 wie folgt gelagert:

Jeweils für einen Zinkentragarm 2 sind mit gegenseitigem Abstand zueinander angeordnete Lager 13 und 14 vorgesehen. Die Lager 13 und 14 sind ihrerseits mit einem Schwenkhebel 15 fest verbunden. Auf Grund des vorhandenen Schwenkhebels 15 ist der Zinkentragarm 2 selbst axial feststehend angeordnet. Bei ortsfest angeordneten Lagern 13 und 14, das heisst bei einer Anordnung, bei der auf die Schwenkhebel 15 verzichtet wird, kann auch eine axiale Verstellmöglichkeit für jeden der Zinkentragarme 2 in Betracht kommen, um die Maschine von einem auf den anderen Betriebsfall umstellen zu können.

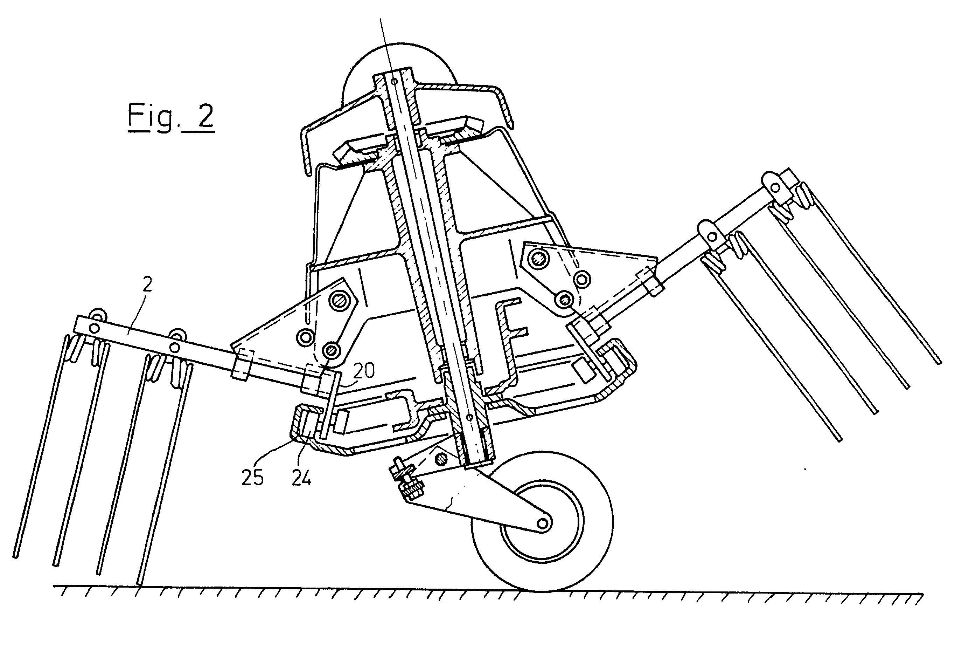

Jeder der Schwenkhebel 15 ist um einen im Maschinengestell 11 feststehend angeordneten Lagerbolzen 16 in einer vertikalen Ebene schwenkbeweglich angelenkt und zwar derart, dass die Zinkentragarme 2 mit Hilfe je eines Steckbolzens 17 und zwei am Schwenkhebel 15 vorgesehenen Bohrungen 18 und 19 in zwei Stellungen überführt werden können. Die Position der Zinkentragarme 2 für den Betriebsfall «Schwaden» ist Figur 1 zu entnehmen, während die Lage der Zinkentragarme 2, wie sie in Figur 2 wiedergegeben ist, derjenigen für den Betriebsfall «Zetten» entspricht.

Das der Achse 5 zugekehrte innere Ende jedes Zinkentragarms 2 ist mit einer Kurbel 20 drehfest verbunden. Die Kurbel 20 trägt eine erste Steuerrolle 21, die in eine räumlich verwundene Kurvenbahn 22 eingreift. Die Kurvenbahn 22 steuert jeden einzelnenZinkentragarm 2 in der für das «Schwaden» erforderlichen, bekannten Art und Weise.

Die Kurvenbahn 22 ist über einen Lagerflansch 23 drehfest mit der Achse 5 des Rechrades verbunden.

Für den Aufbau und die Funktion der beschriebenen Heuwerbungsmaschine ist wesentlich, dass zusätzlich zu der ersten Steuerrolle 21 an jeder der Kurbeln 20 und zwar auf der der ersten Steuerrolle 21 abgewandten Seite eine zweite Steuerrolle 24 vorgesehen ist. Vorzugsweise weisen die ersten Steuerrollen 21 und die zweiten Steuerrollen 24 gleiche Durchmesser auf.

Den zweiten Steuerrollen 24 ist eine ebene Führungsbahn 25 zugeordnet, die, etwa auf Höhe des tiefsten Punktes der Kurvenbahn 22 liegend, in Bezug auf die Achse 5 feststehend angeordnet ist. Im dargestellten Ausführungsbeispiel weist diese Führungsbahn 25 einen relativ grossen Durchmesser auf und ist mittels eines etwa deckelförmig gestalteten Blechs 26 am Lagerflansch 23 in gleicher Weise wie die Kurvenbahn 22 gehaltert.

Was die Ausgestaltung der Führungsbahn 25 angeht, ist wesentlich, dass sie nach innen, das heisst in Richtung auf die Achse 5 geöffnet ist. Dies in der Weise, dass die zweiten Steuerrollen 24, zumindest in einer Stellung der Rechwerkzeuge 3 bei einem von innen nach aussen gerichteten Bewegungsablauf der Zinkentragarme 2 ohne weiteres in die nach innen offenen Führungsbahn 25 eintreten können.

Im dargestellten Ausführungsbeispiel erfolgt die Umstellung der Heuwerbungsmaschine von einem auf den anderen Betriebsfall wie folgt:

Jeder der Zinkentragarme 2 wird nach Entriegeln der Steckverbindung (Steckbolzen 17/Bohrung 18) durch Verschwenken des Schwenkhebels 15 nach oben von der Steuervorrichtung entkoppelt. Während dieser Verschwenkbewegung (oder auch einer axialen Verschiebebewegung) treten hierbei die ersten Steuerrollen 21 aus der räumlich verwundenen Kurvenbahn 22 aus, während sich die zweiten Steuerrollen 24 zunehmend der nach innen geöffneten Führungsbahn 25 nähern, bis sie schliesslich vollständig in diese eintauschen. In dieser Position wird jeder Schwenkhebel 15 erneut mit Hilfe des Steckbolzens 17 über die Bohrung 19 am Drehgestell 11 festgelegt. Nunmehr befinden sich die Zinkentragarme 2 in der in Figur 2 dargestellten Position, die der Stellung «Zetten» entspricht.

Analog zur Position «Schwaden» werden die durch die Rechwerkzeuge 3 eingeleiteten Kräfte im Falle «Zetten» ausschliesslich über die Kurbelarme 20, die zweiten Steuerrollen 24 und die Führungsbahn 25 aufgenommen. Eine Sicherung jedes der einzelnen Zinkentragarme 2 gegen Verdrehen im Drehgestell ist nicht erforderlich, so dass dies demzufolge baulich leicht gestaltet werden kann. Durch die im wesentlichen gleichbleibenden Hebel-Eingriffsverhältnisse beim Zetten und Schwaden unterliegen die abstützenden Bauelemente (Kurbelarm 20, zweite Steuerrollen 24 und Führungsbahn 25) normal Verschleiss- und Kräftebeanspruchungen.

Das zur Bodenoberfläche hin praktisch geschlossene Gehäuse stellt zudem einen hervorragenden Schutz für die die Zinkentragarme 2 steuernden bzw. abstützenden Bauteile dar. Bedarfsweise kann die Maschine konstruktiv ohne weiteres so gestaltet werden, dass die äusseren, sich drehenden Teile der Maschine mit dem feststehenden, unteren Abschlussteil (deckelförmiges Blech 26) eine geschlossene Einheit bilden.

Bei dem bisher beschriebenen Ausführungsbeispiel wurde die zusätzliche Führungsbahn 25 bewusst so angeordnet, dass sie unterhalb derjenigen Horizontalebene liegt, in der die Zinkentragarme 2 in ihrer in Figur 1 wiedergegebenen Stellung umlaufen. Grundsätzlich kann die beschriebene Ausführung jedoch auch so abgewandelt werden, dass die Führungsbahn 25 oberhalb dieser Ebene liegend angeordnet ist. Um aber bei dieser räumlichen Lage sicherzustellen, dass die Rechwerkzeuge 3 in ihrer der Zettstellung entsprechenden Lage ebenfalls etwa lotrecht zur Bodenoberfläche gerichtet sind, müsste jeder der Kurbelarme 20 – gesehen in Vorderansicht – V-förmig gestaltet sein. An jedem der, einen spitzen Winkel miteinander einschliessenden Abschnitte wäre dann einerseits die erste Steuerrolle 21 und anderseits die nach aussen gerichtete zweite Steuerrolle 24 anzubringen.

Wegen des besseren Schutzes der Maschine gegen Verunreinigungen wird, wie gesagt, die Anordnung mit der in den Zeichnungen dargestellten Lage der Führungsbahn 25 bevorzugt. Die zusätzlich erwähnte Ausführungsform wird jedoch als zur Erfindung gehörig betrachtet.

Anstelle der vorgesehenen Verschwenkmöglichkeit der gesamten Zinkentragarmeinheiten zum Umstellen der Maschine von Zetten auf Schwaden genügt es bei einer weiteren erfindungsgemässen Ausführungsform, lediglich eine Verschwenkmöglichkeit für die Kurbel 20 vorzusehen. Auch durch alleiniges Verschwenken der Kurbeln kann die erste oder zweite Steuerrolle 21 bzw. 24 in oder ausser Eingriff mit der Kurvenbahn 22 bzw. der Führungsbahn 25 gebracht werden.

## Patentansprüche

1. Heuwerbungsmaschine mit mindestens zwei gleich oder entgegengesetzt gerichtet umlaufenden, mit Zinkentragarmen (2) versehenen Rechrädern (1), von denen jedes Rechrad (1) eine – bezogen auf seine Achse (5) – innen liegende, räumlich verwundene ortsfeste Kurvenbahn (22) aufweist, in die an Kurbeln (20) der Zinkentragarme (2) angeordnete Steuerrollen (21) eingreifen, wobei diese Lage der Schwadstellung entspricht, aus der die Zinkentragarme (2) in eine weitere Lage überführbar sind, die dann der Zettstellung entspricht, in der die Steuerrollen in einer etwa horizontal liegenden Führungsbahn so geführt sind, dass die Tragarme, gegebenenfalls schräg nach oben gerichtet, lageunveränderlich umlaufen, dadurch gekennzeichnet, dass an den Kurbeln (20) neben den ersten, in Bezug auf die Achse (5) des Rechrades (1) nach innen gerichteten Steuerrollen (21) zusätzliche zweite, in Bezug auf die Achse (5) des Rechrades (1) nach aussen gerichtete Steuerrollen (24) angeordnet sind, und dass die gegenüber der Kurvenbahn (22) aussen liegende Führungsbahn (25) in Bezug auf die Achse (5) des Rechrades (1) nach innen geöffnet ist und insgesamt unter – oder oberhalb der Ebene der Zinkentragarme (2) derart liegend angeordnet ist, dass die zweiten Steuerrollen (24) zum Umstellen der Zinkentragarme (2) in ihre ungesteuerte Lage zum Zetten in die Führungsbahn (25) eintauchen.

2. Heuwerbungsmaschine nach Anspruch 1, dadurch gekennzeichnet, dass die Ebene der Führungsbahn (25) – gesehen in Seitenansicht – mit einer senkrecht zur Achse (5) stehenden Ebene einen spitzen Winkel einschliesst.

3. Heuwerbungsmaschine nach Anspruch 1, dadurch gekennzeichnet, dass die Führungsbahn (25) einen U-förmigen Querschnitt aufweist.

4. Heuwerbungsmaschine nach den Ansprüchen 1 bis 3, dadurch gekennzeichnet, dass die Führungsbahn (25) Bestandteil eines etwa deckelförmigen Teils (26) ist, welches zumindest die Kurvenbahn (22) und die Steuerrollen (21, 24) samt Kurbeln (20) zur Bodenoberfläche hin abschirmt.

5. Heuwerbungsmaschine nach Anspruch 1, dadurch gekennzeichnet, dass die Kurbeln (20) bei oberhalb der Ebene der Zinkentragarme (2) liegender Führungsbahn (25) V-förmig ausgebildet sind, wobei an jedem der Hebel einer Kurbel (20) je eine Steuerrolle (21 oder 24) angeordnet ist.

6. Heuwerbungsmaschine nach Anspruch 1, dadurch gekennzeichnet, dass die Kurvenbahn (22) und die Führungsbahn (25) an einem gemeinsamen Lagerflansch (23) befestigt sind.

## Revendications

1. Machine pour la fenaison avec au moins deux roues (1) de fanage tournant dans le même sens ou en direction opposée, pourvues de bras (2) de support de dents, chaque roue de fanage (1) présentant un chemin incurvé stationnaire (22) sinueux dans l'espace, et se trouvant vers l'intérieur en se rapportant à son axe (5), sur lequel agissent des galets de commande (21) disposés sur des manivelles (20) des bras (2) de support des dents, cette position correspondant à la position d'andain à partir de laquelle les bras (2) de support des dents peuvent être guidés à une autre position qui correspond à la position d'épandage dans laquelle les galets de commande sont guidés dans une voie à peu près horizontale de guidage de façon que les bras de support, le cas échéant dirigés de manière oblique vers le haut, se déplacent sans modification de position, caractérisée en ce que sur les manivelles (20) en plus des premiers galets de guidage (21) disposés vers l'intérieur par rapport à l'axe (5) de la roue de fanage (1), sont disposés de plus des seconds galets de guidage (24) dirigés vers l'extérieur par rapport à l'axe (5) de la roue de fanage (1) et en ce que la voie de guidage (25) se trouvant vers l'extérieur vis-à-vis du chemin incurvé (22), est ouverte vers l'intérieur par rapport à l'axe (5) de la roue de fanage (1) et est disposée, dans l'ensemble, en-dessous ou au-dessus du plan des bras (2) de support des dents de façon que les seconds galets de guidage (24) s'enfoncent, pour le passage des bras de support des dents (2) à leur position non commandée, pour l'épandage, dans la voie de guidage (25).

2. Machine pour la fenaison selon la revendication 1 caractérisée en ce que le plan de la voie de guidage (25), regardé en vue latérale, forme un angle aigu avec un plan perpendiculaire à l'axe (5).

3. Machine pour la fenaison selon la revendication 1 caractérisée en ce que la voie de guidage (25) présente une section transversale en forme de U.

4. Machine pour la fenaison selon l'une des revendications 1 à 3 caractérisée en ce que la voie de guidage (25) fait partie d'une pièce (26) en forme de couvercle qui abrite au moins le chemin incurvé (22) et les galets de commande (21, 24) avec manivelles (20) par rapport à la surface du sol.

5. Machine pour la fenaison selon la revendication 1 caractérisée en ce que les manivelles (20) sont en forme de V dans le cas d'une voie de guidage (25) se trouvant au-dessus du plan des bras (2) de support des dents, et sur chacun des leviers d'une manivelle (20), est disposé un galet de commande (21 ou 24).

6. Machine pour la fenaison selon la revendication 1 caractérisée en ce que le chemin incurvé (22) et la voie de guidage (25) sont fixés à une bride commune d'appui (23).

## Claims

1. Haymaking machine having at least two raking wheels (1) which rotate in the same or opposite dirctions and are provided with tine support arms (2), each raking wheel (1) having a fixed curved track (22) which is three-dimensionally twisted and is disposed inwardly – with respect to its axis (5) – said curved track having control rollers (21) engaging therein, which control rollers are disposed on cranks (20) of the tine support arms (2), this position of engagement corresponding to the swathing position from which the tine support arms (2) are transferable to a further position which then corresponds to the tedding position in which the control rollers are guided in a substantially horizontal guide path in such a manner that the support arms, which are possibly orientated inclined upwardly, rotate in a constant-position-manner, characterised in that, in addition to accommodating the first control rollers (21) which are inwardly orientated with respect to the axis (5) of the raking wheel (1), the cranks (20) accommodate two additional control rollers (24) which are outwardly orientated with respect to the axis (5) of the raking wheel (1), and in that the curved track (25), which is disposed outwardly of the curved track (22) opens inwardly with respect to the axis (5) of the raking wheel (1) and is totally disposed in a horizontal position below – or above – the plane of the tine support arms (2) in such a manner that the second control rollers (24) pass into the curved track (25) to convert the tine support arms (2) into their uncontrolled position for tedding purposes.

2. Haymaking machine according to claim 1, characterised in that the plane of the curved track (25) – when seen in a side elevational view – subtends an acute angle with a plane which extends at right angles to the axis (5).

3. Haymaking machine according to claim 1, characterised in that the curved track (25) has a U-shaped cross-section.

4. Haymaking machine according to claim 1 to 3, characterised in that the curved track (25) is a component part of a substantially cover-shaped member (26) which protects from the surface of the ground at least the curved track (22) and the control rollers (21, 24) together with cranks (20).

5. Haymaking machine according to claim 1, characterised in that the cranks (20) are V-shaped when the curved track (25) extends above the plane of the tine support arms (2), a control roller (21 or 24) being disposed on each of the levers of a crank (20).

6. Haymaking machine according to claim 1, characterised in that the curved track (22) and the curved track (25) are mounted on a common bearing flange (23).

Fig. 1

0 067 282

Fig. 2